# FASCICULE DE BREVET EUROPEEN

(11) **EP 4 139 105 B1**
(45) Date de publication et mention de la délivrance du brevet: **10.12.2025**
(21) Numéro de dépôt: 21718056.1
(22) Date de dépôt: 01.04.2021
(51) Int. Cl.: B29B 17/02, C10C 3/00, E01C 19/10, B29B 17/04, B29K 95/00, B29K 105/06, B29L 31/10

(54) **INSTALLATION ET PROCEDE DE TRAITEMENT DE PRODUITS COMPOSITES A BASE DE MATIERES THERMOPLASTIQUES**
ANLAGE UND VERFAHREN ZUR BEHANDLUNG VON VERBUNDWERKSTOFFEN AUF BASIS VON THERMOPLASTISCHEN KUNSTSTOFFEN
INSTALLATION AND METHOD FOR TREATING COMPOSITE MATERIALS BASED ON THERMOPLASTIC MATERIALS

(30) Priorité: 22.04.2020 FR 2004015
(43) Date de publication de la demande: 01.03.2023
(73) Titulaire: SOPREMA, 67100 Strasbourg (FR)
(72) Inventeur: BINDSCHEDLER, Pierre-Etienne, 67000 Strasbourg (FR); BALL, Patrick, 67140 Barr (FR)
(74) Mandataire: Ipsilon
(86) Numéro de dépôt international: PCT/EP2021/058719
(87) Numéro de publication internationale: WO 2021/213792

(56) Documents cités:
- WO-A1-97/36725
- US-A- 4 726 846
- US-A1- 2014 263 779
- US-B1- 9 440 239
- G GUINÉE: "Un remploi innovateur de vieille couverture bitumineuse", 26 October 2006 (2006-10-26), pages 24 - 25, XP055764538, Retrieved from the Internet <URL:http://www.dakweb.nl/rbf/2003-10-Fr/RB2003-10%20P24-25.pdf> [retrieved on 20210113]

## Description

La présente invention concerne le domaine du recyclage et de la valorisation des déchets d'usine et de chantier dans le contexte des matériaux et systèmes d'étanchéité, en particulier en relation avec des membranes d'étanchéité bitumineuses, et a pour objet une installation et un procédé de traitement de produits composites à base de matières thermoplastiques.

Dans le cadre de la tendance générale à rechercher une possible valorisation des déchets, une demande grandissante, et actuellement non solutionnée de manière satisfaisante, ni au niveau technique, ni au niveau économique, concerne les déchets d'usine et surtout de chantiers dans le domaine de l'étanchéité, en particulier en relation avec les membranes d'étanchéité bitumineuses.

Le principal problème rencontré, et à ce jour non solutionné de manière satisfaisante, concerne la présence, souvent intriquée avec la matière à valoriser, de polluants non valorisables, notamment des particules solides dures, du type métalliques, minérales ou autres (provenant d'éléments d'assemblage, de fixation, de recouvrement ou similaires).

En particulier, les déchets de déconstruction du marché de la rénovation représentent à ce jour un gisement potentiel de membranes d'étanchéité à traiter, estimé à ce jour à 100 000 tonnes par an en France (estimation par la chambre syndicale de l'étanchéité française), ce gisement étant renouvelé chaque année. Le coût d'enfouissement de ces déchets augmente depuis de nombreuses années, et cette tendance devrait se poursuivre, surtout qu'aucune véritable solution industrielle de traitement des déchets de déconstruction n'est proposée à ce jour.

Il existe donc une demande forte et constante pour tenter de trouver une solution industrielle pour réduire la consommation d'une ressource fossile qui se raréfie et qui serait réellement efficiente dans le recyclage des membranes d'étanchéité.

La constitution et donc le traitement de ces déchets sont complexes, car lors de réfections de toitures de bâtiments, il est possible de superposer plusieurs couches de membranes les unes sur les autres et de les assembler par collage ou soudure, et de les fixer mécaniquement au support.

Toutefois, au bout d'un certain nombre de réfections (dépendant de la législation du pays concerné en la matière), il est nécessaire et obligatoire d'enlever la totalité du système de couverture et de mettre en place une nouvelle étanchéité sur la toiture (charpente, toiture, terrasse) à l'état brut.

Les déchets récupérés à l'issue de cette opération d'enlèvement total, dits déchets de déconstruction, comprennent, pour l'essentiel des stratifiés de membranes bitumeuses accolées les unes aux autres et présentant divers types de finition, notamment granulés d'ardoises, sable, feuilles d'aluminium complexé (PET-alu). Ces déchets peuvent également contenir des polluants solides, notamment isolant (PUR, XPS, laine minérale, fibres de bois...), pièces métalliques (accroches métalliques des membranes fixées mécaniquement, lames de scie pour la découpe des déchets...), et détritus divers associés à l'entreposage d'une benne dans un chantier de bâtiment (cailloux, pierres, canettes...).

Ainsi, en relation avec la demande exprimée ci-dessus, les produits composites qu'il serait souhaitable de pouvoir traiter dans le cadre du champ d'application concerné par l'invention comprennent essentiellement :
- les membranes bitumeuses contenant une armature par ex. : Polyester non tissé PNT ou voile de verre...), un liant bitumineux (ex : polymère et bitume, additifs, charge...), une finition de surface (ex : granulés d'ardoises sable, feuilles d'aluminium complexées...). Potentiellement ces membranes sont agglomérées en couches successives fusionnées les unes aux autres lors de la pose par chauffage. (Dimension des plaques récupérées : ~ 1 m x ~1 m x (1 à 20) cm). Alternativement, les produits à traiter peuvent comprendre des rouleaux de membranes bitumeuses issus de productions (second choix). Alternativement ces membranes peuvent être prébroyées.
- des polluants solides de diverses natures : isolants (PUR, XPS, laine minérale, fibres de bois...), pièces métalliques (accroche métallique des membranes fixées mécaniquement, lames de scie pour la découpe des déchets...), ou détritus divers (cailloux, pierres, canettes...).

A l'issue du traitement de recyclage, le produit sortant valorisable recherché comprend en particulier des liants lisses à base de bitume, intégrant également des polymères et des particules ou des fragments de fibres dispersés, de dimension inférieure à 100 µm.

De plus, ce traitement devrait, si possible, ne générer aucun déchet, hormis des polluants solides macroscopiques qui devraient être, extraits en cours de traitement (du type cailloux, pierres, vis, boulons, clous, rivets, fragments de tôle ou analogues).

Or, les appareils et installations connus à ce jour pour le recyclage du type de produits précité ne permettent pas de répondre à la demande ci-dessus, ni d'aboutir au résultat souhaité, en tout cas pas de manière fiable et pérenne.

Ainsi, les séparateurs de polluants métalliques ferromagnétiques (à aimants) ou non ferromagnétiques (à courant de Foucault) ne ciblent qu'un type de polluants, et ne peuvent réaliser une extraction d'éléments noyés, imbriqués ou trop intimement liés aux matériaux à valoriser.

De même, les systèmes basés sur la séparation du fait de différences de densités entre composantes, du type systèmes centrifuge, tables densimétriques, dispositif à décantation ou analogues, sont soit inefficaces, soit économiquement non viables.

Les systèmes connus (cf. notamment WO 2008/103035, US 2005/263625, EP 1 123 182 et WO 2009/090546) sous forme d'extrudeuses ou de convoyeurs à vis hélicoïdale classique, sont quant à eux sujets à blocage lors de la présence d'une particule macroscopique dure (type boulon) et subissent une usure importante et rapide en présence de particules dures microscopiques (tel que du sable).

Par le document US 4 726 846, on connait une installation de traitement à des fins de recyclage de produits composites à base de matière(s) thermoplastique(s), plus particulièrement de déchets contenant majoritairement des membranes bitumineuses, selon le préambule de la revendication 1. Toutefois, ce document vise le traitement de déchets de fabrication de membranes et n'évoque pas les problèmes liés à la présence de déchets macroscopiques et microscopiques dans des membranes usagées, ni a fortiori ne propose une solution à ces problèmes.

D'autres installations de traitement de membranes usagées sont connues des documents US 2014/263779, WO 97/36725 et US 9 440 239.

La présente invention a pour but de proposer, par rapport à l'état de la technique mentionnée ci-dessus, une solution améliorée pour répondre à la demande mentionnée précédemment.

A cet effet, elle a pour objet une installation de traitement selon le préambule de la revendication 1 et présentant également les caractéristiques de la partie caractérisante de ladite revendication 1.

La présente invention a pour but de pallier ces inconvénients.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une représentation symbolique des principales composantes d'une ligne de traitement et d'extraction d'une installation selon l'invention ;
[Fig. 2] est une représentation symbolique, à une échelle différente, d'un ensemble fonctionnel [broyeur à rouleaux / moyen de séparation macroscopique] faisant partie de la ligne de traitement et d'extraction de la figure 1 ;
[Fig. 3] est une vue schématique en élévation d'un mode de réalisation d'une installation selon l'invention, intégrant une ligne de traitement et d'extraction selon la figure 1 ;
[Fig. 4] est une vue en élévation d'un broyeur à cylindres faisant partie du moyen de broyage de l'installation de la figure 3, selon un premier mode de réalisation de l'invention, en l'absence de flux d'extrant du mélangeur (entrefer nul - cylindres en contact) ;
[Fig. 5] est une vue partielle en élévation et partiellement écorchée d'un broyeur à cylindres, selon un second mode de réalisation de l'invention, en cours de laminage d'un flux d'extrant venant du mélangeur (entrefer préréglé);
[Fig. 6] est une vue similaire à celle de la figure 5, illustrant l'écartement additionnel des cylindres du broyeur lors du passage d'une particule macroscopique dure ;
[Fig. 7] est une vue partielle en coupe du broyeur de la figure 5, montrant d'autres détails constructifs ;
[Fig. 8A] est une vue en perspective d'un mélangeur à double vis faisant partie de l'installation des figures 1 et 3 (le couvercle de fermeture de l'auge étant enlevé) ;
[Fig. 8B] est une vue de dessus schématique des deux vis faisant partie du mélangeur de la figure 8A ;
[Fig. 9] est une vue en coupe d'un filtre pouvant servir de moyen de séparation microscopique selon une première variante de réalisation de l'invention ;
[Fig. 10A] est une vue en coupe d'un raffineur à deux cylindres interpénétrants (cylindre intérieur doublement rotatoire) formant moyen de séparation microscopique selon une seconde variante de réalisation de l'invention ;
[Fig. 10B] est une vue schématique de dessus et en coupe du raffineur de la figure 10A ;
[Fig. 11] est une vue schématique en perspective et par transparence d'une installation selon l'invention, comportant deux lignes de traitement et d'extraction ;
[Fig. 12] est une vue schématique en perspective et par transparence d'un site de recyclage intégrant l'installation de la figure 11 ;
[Fig. 13A] est une représentation schématique similaire à celle de la figure 2 d'une variante de réalisation de l'ensemble [broyeur à rouleaux / moyen de séparation macroscopique], et,
[Fig. 13B] est une vue en perspective de l'organe pivotant cylindrique faisant partie du moyen de séparation de la figure 13A.

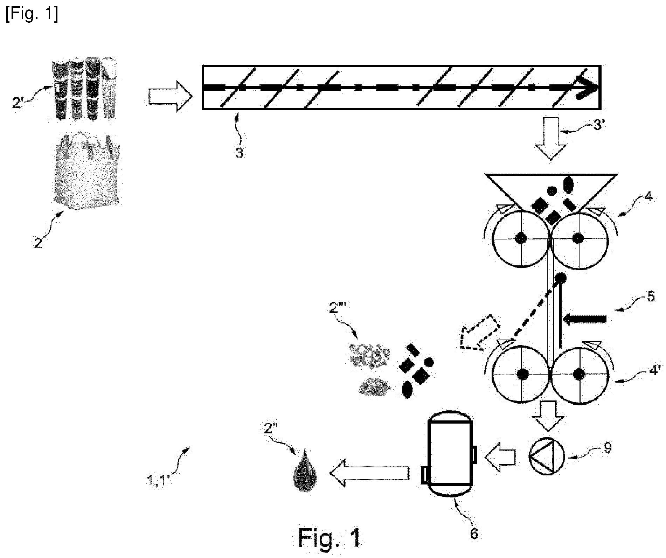

Les figures 1, 3 et 11 montrent, au moins partiellement, une installation 1 de traitement (à des fins de recyclage/réutilisation) de produits composites 2 à base de matière(s) thermoplastique(s), plus particulièrement de déchets contenant majoritairement des membranes bitumineuses 2'. Cette installation 1 comprend au moins des moyens 3, 4, 4', 5, 6 respectivement de chauffage, de réduction dimensionnelle, de broyage et de séparation, ces moyens étant arrangés pour former au moins une ligne 1' de traitement et d'extraction de matière(s) à valoriser, fonctionnant en flux continu ou intermittent, le cas échéant régulé.

Conformément à l'invention, il est prévu que :
les moyens 3 de chauffage et de réduction dimensionnelle comprennent au moins un mélangeur chauffant à vis, recevant les produits composites 2 à traiter, configuré pour autoriser le passage de particules macroscopiques et délivrant un extrant hétérogène 3' sous forme liquide ou visqueuse, chargé notamment en particules et en fibres,
le moyen de broyage comprenne au moins un broyeur à cylindres 4, 4' comportant deux cylindres de laminage 7 et 7' chauffés et entrainés en rotation en sens contraires, ces cylindres définissant entre eux un entrefer de passage, de dimension centimétrique, dans lequel l'extrant 3' du mélangeur 3 est introduit par chute sous l'effet de la gravité,
les moyens de séparation 5, 6 comprennent au moins un moyen de séparation macroscopique 5 sous la forme d'un dispositif de rejet de particules polluantes macroscopiques présentes dans l'extrant 3' et non ou insuffisamment réduites par le broyeur à cylindres 4, 4' auquel il est associé, et
les moyens de séparation 5, 6 comprennent aussi au moins un moyen de séparation microscopique 6, préférentiellement avec réduction à une dimension millimétrique, lequel est choisi dans le groupe formé par un filtre adapté à la matière à valoriser, un réducteur, un raffineur, une pompe dilacératrice, un dilacérateur ou une association de deux parmi les moyens précités.

L'installation 1 comprend, outre les moyens 3, 4, 4', 4, 6 précités arrangés dans l'ordre indiqué (étapes de traitement successives), avantageusement également des moyens 8 d'alimentation du mélangeur 3 et des moyens 9, 10 de transfert et/ou de stockage de l'extrant dépollué et/ou de la matière 2" valorisée.

On relève que l'installation 1 réalise, par une succession ordonnée spécifique d'opérations de transformation et d'extraction adaptées, un traitement progressif, efficient, fiable et reproductible, aboutissant à un extrant final valorisé de qualité constante pour des intrants déterminés, pouvant être utilisé pour la fabrication de nouveaux produits d'étanchéité.

Le mélangeur 3 peut être alimenté soit par des produits 2 sous forme de déchets bruts, ayant éventuellement fait l'objet d'un tri préalable (manuel ou automatique), soit par des déchets prétraités ayant subis une première opération de découpe et de réduction de taille (copeaux, fragments, morceaux), par exemple au niveau d'une première station amont 16 comprenant un ou plusieurs broyeurs 16' arrangés (en série).

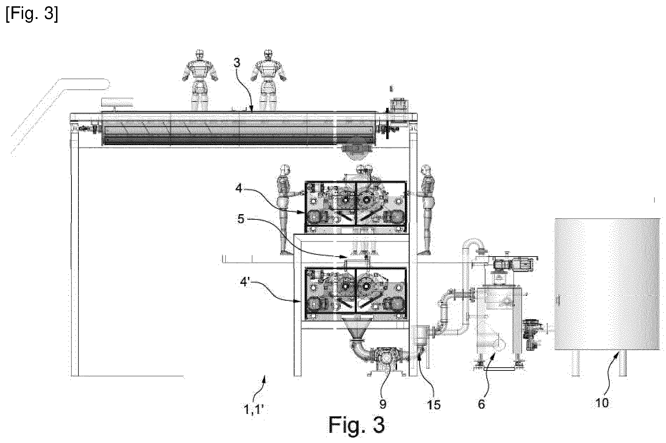

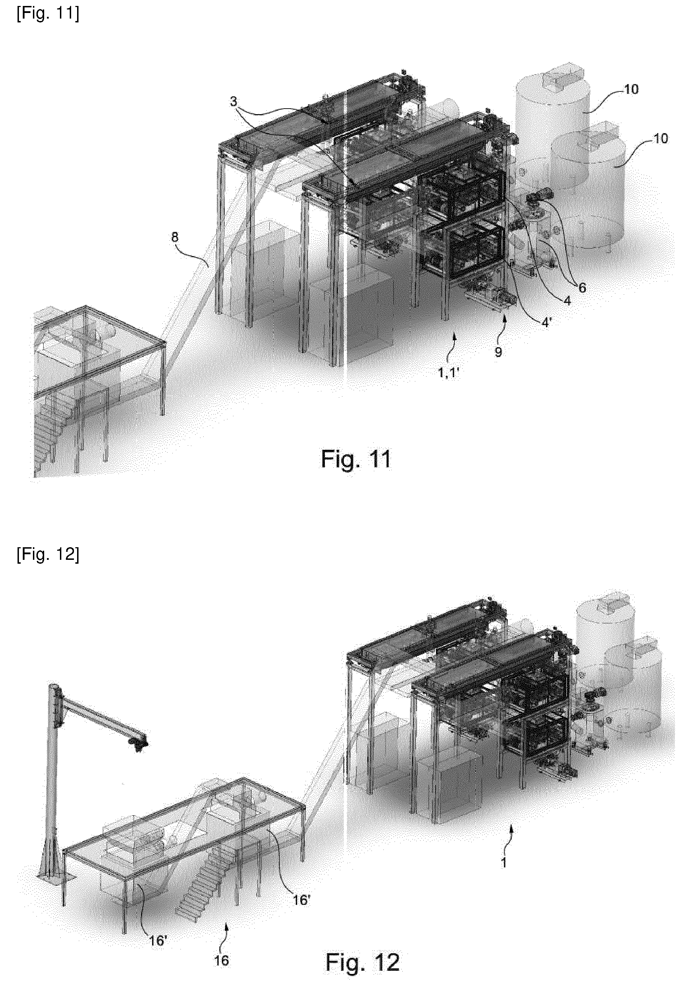

L'installation 1 peut comprendre soit une ligne de traitement et d'extraction 1' (figures 1 et 3), soit plusieurs lignes 1' de ce type, montées en parallèle (figures 11 et 12).

En outre, comme indiqué, le mélangeur chauffant 3 est "perméable" aux particules macroscopiques 2‴ dures et résistantes aux températures atteintes dans ce dernier (autrement dit, elles ne bloquent pas ledit mélangeur 3), en comportant par exemple des voies de cheminement entre l'entrée et la sortie pour de telles particules 2‴, lesquelles se retrouvent ensuite dans l'extrant 3' liquide ou semi-liquide déversé par le mélangeur 3.

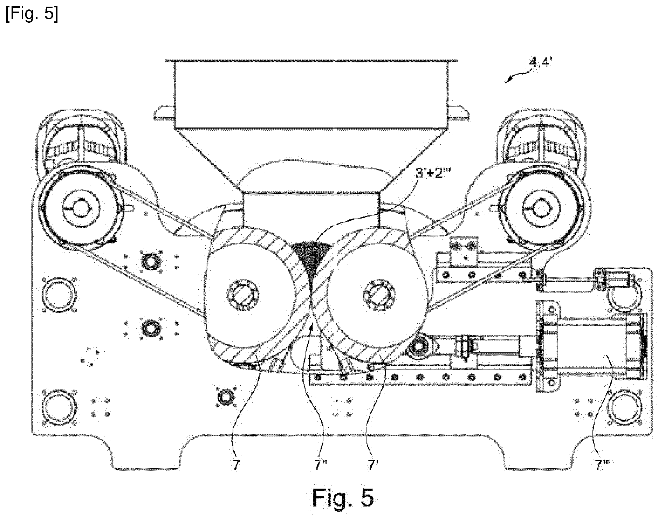

Ce dernier peut être amené directement dans le moyen de broyage 4, 4' ou être stocké temporairement (par accumulation) dans un réservoir ou une trémie tampon, préférentiellement chauffé(e), comme illustré sur les figures 5 à 7.

Comme cela ressort des figures 1, 2 et 13A, le dispositif de rejet 5 est disposé sous l'unique ou le premier broyeur à cylindres 4, dans le trajet de chute du flux d'extrant 3' sortant de ce dernier, et comprend un moyen mobile 5' d'éjection ou d'extraction à la volée des particules polluantes macroscopiques 2‴ du flux d'extrant 3', avec ou sans interruption temporaire dudit flux, ce en réaction à un signal d'actionnement délivré par ledit broyeur à cylindres 4.

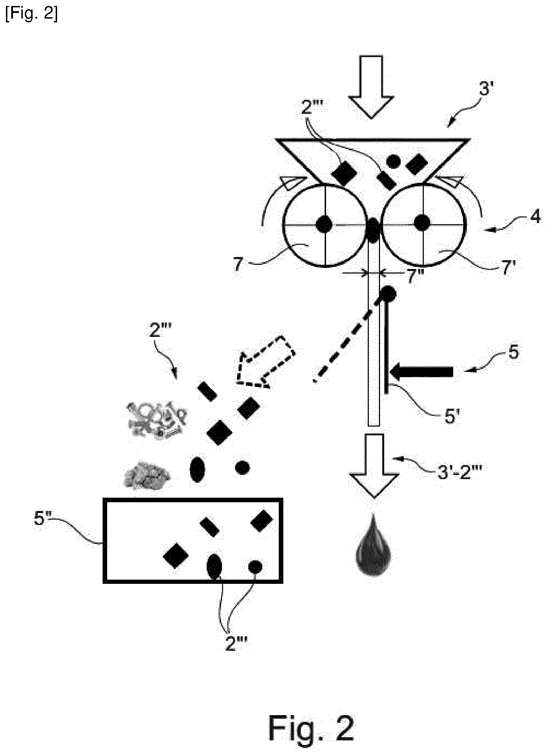

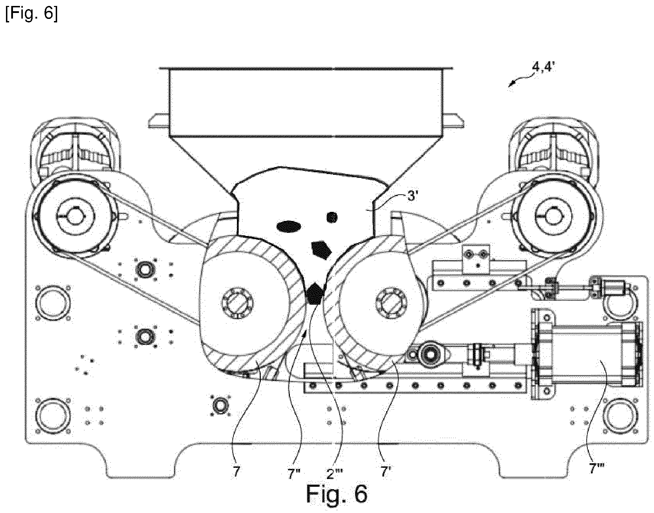

Avantageusement, le signal d'actionnement correspond à un déplacement anormal de l'un au moins 7 des deux cylindres 7, 7' du broyeur 4 concerné, monté mobile, ou à une augmentation anormale de l'entrefer de passage préréglé 7" entre les deux cylindres 7 et 7', provoqué(e) par le passage entre lesdits cylindres d'au moins une particule polluante 2‴ dont la taille dépasse une valeur seuil et qui résiste au broyage. (voir figures 2 et 6).

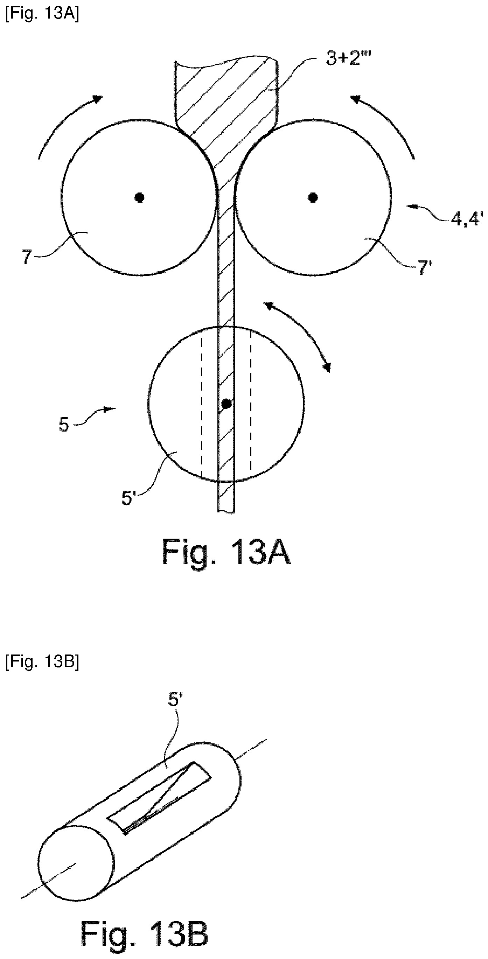

Préférentiellement, le dispositif de rejet 5 comprend un organe 5' pivotant ou translatif, expulsant la ou les particules polluantes cibles 2‴ du flux d'extrant 3' ou déviant ou interrompant temporairement ce dernier, sous forme de voile ou d'écran, suite à un actionnement commandé. (voir figures 2, 13A et 13B).

En relation avec les figures annexées, il ressort de ce qui précède que l'extrant 3' chaud, liquide et contenant des particules macroscopiques dures 2"', traverse sous l'effet de la gravité, l'entrefer 7" préréglé d'au moins un broyeur 4 à double cylindres rotatifs 7, 7' en subissant une opération de laminage (typiquement un entrefer d'environ 0,5 à 5,0 mm, préférentiellement d'environ 0,5 à 2,0 mm).

Comme le montre les figures 1, 3, 11 et 12, le moyen de broyage comprend au moins deux broyeurs à cylindres 4 et 4' successifs présentant des valeurs d'entrefers 7" différentes (valeurs de consigne) et arrangés l'un sous l'autre en étant alignés par rapport au flux chutant d'extrant 3', le dispositif 5 de rejet de particules polluantes macroscopiques (2‴) étant arrangé entre le premier broyeur 4 et le second broyeur 4'.

Le second broyeur à cylindres 4', aligné verticalement avec le premier broyeur 4, présente avantageusement un entrefer 7" plus faible que celui du premier broyeur 4. Il peut le cas échéant être associé à un second dispositif de rejet 5.

L'organe mobile 5' peut se présenter par exemple sous la forme d'un volet pivotant (figures 1 et 2) qui peut interférer avec le voile ou la membrane liquide / visqueuse d'extrant 3' sortant de l'entrefer 7" du broyeur 4 et en dévier momentanément une partie contenant au moins une particule macroscopique dure 2"' (non écrasée par le laminage entre les cylindres 7 et 7'), avantageusement vers un réceptacle de collecte 5".

L'organe mobile 5' peut aussi consister en un organe rotatif du type tambour avec un orifice traversant aligné avec le flux d'extrant 3' sortant de l'entrefer 7", ledit flux pouvant être dévié momentanément par rotation du tambour à 90°, pour expulser des traitements ultérieurs la partie de flux d'extrant 3' contenant au moins une particule macroscopique dure 2"'. (Figures 13A et 13B).

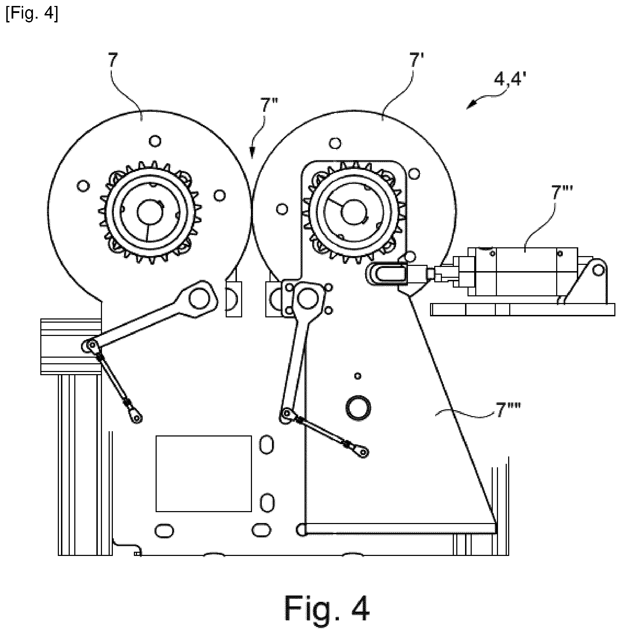

Comme le montrent également les figures 4 à 7, l'entrefer 7", ainsi que le cas échéant la force résistive de compression, entre les cylindres 7 et 7' peuvent être déterminés par un actionneur du type vérin 7‴, éventuellement associé à un mécanisme à balourd 7"".

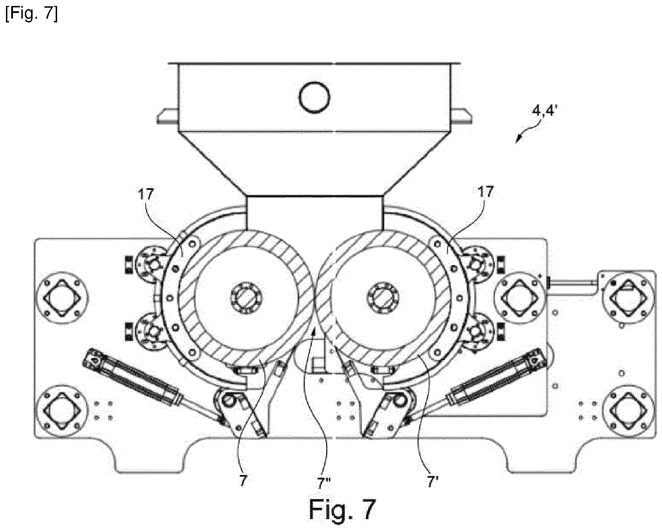

Les cylindres 7 et 7' sont préférentiellement chauffés, soit de l'intérieur, soit par l'intermédiaire de râcles chauffantes 17 qui permettent également de nettoyer leur surface (figure 7).

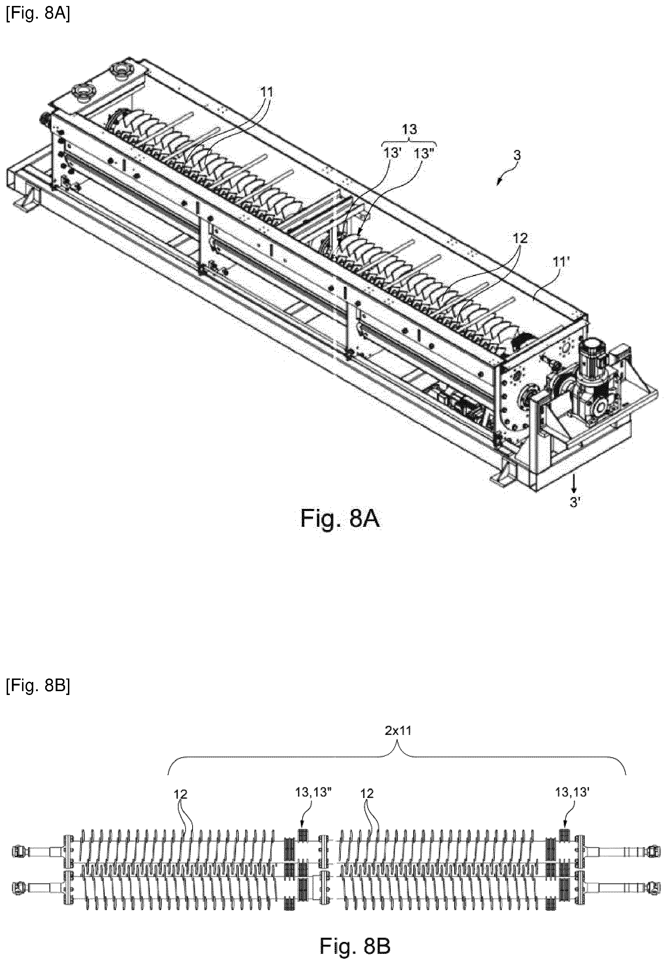

Selon une caractéristique de l'invention, ressortant notamment des figures 8A et 8B, le mélangeur à vis 3 comporte deux vis chauffantes parallèles 11, montées dans une auge chauffante 11' et présentant des filets hélicoïdaux discontinus, mutuellement interpénétrants et formés chacun de pales 12 séparées, plates et planes, montées de manière inclinée sur l'arbre support de la vis 11 concernée.

Une telle construction permet, en partant le cas échéant de plaques ou de rouleaux de membranes 2' comme produits intrants 2 majoritaires, de disposer à la sortie du mélangeur 3, du fait des actions conjuguées de cisaillement et de chauffage, d'un extrant liquide chaud 3' (température comprise par exemple entre 140°C et 220°C, au-dessus de la température de fusion / ramollissement du liant thermoplastique majoritaire). Compte tenu de la nature discontinue des filets des deux vis 11 du mélangeur 3, ce dernier peut s'accommoder de la présence et du transfert de particules macroscopiques dures 2"' sans risque de blocage.

Préférentiellement, et pour intensifier au moins temporairement l'action de désagrégation mécanique à l'intérieur du mélangeur 3, ce dernier peut également comporter au moins un module de cisaillement 13 formé par au moins un premier groupe de pales 13' séparées, plates et planes, montées de manière perpendiculaire sur l'arbre support de la vis 11 considérée et venant en engagement interpénétrant mutuel avec un groupe de pales 13" séparées, plates et planes correspondantes fixées dans l'auge 11' ou sur l'autre vis 11.

A titre d'exemple de mise en œuvre préférée, le ou chaque mélangeur à vis 3 peut consister en un mélangeur tel que décrit dans la demande de brevet français n° 2003999 déposée le 22 avril 2020 au nom de la demanderesse.

Comme indiqué précédemment, le moyen de séparation microscopique 6, qui réalise préférentiellement aussi une opération de réduction dimensionnelle, peut consister en différents appareils, voire différents ensembles d'appareils.

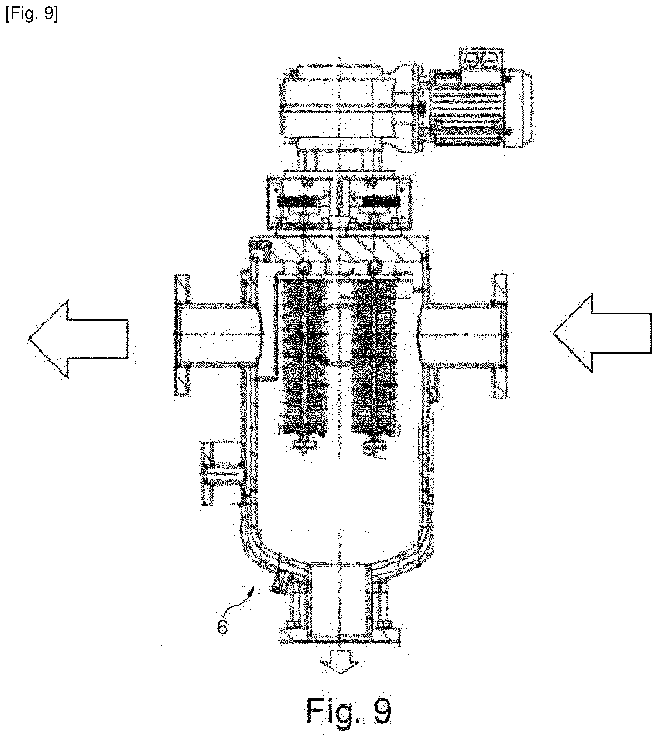

Ainsi, comme le montre la figure 9, ce moyen 6 peut notamment comprendre un filtre adapté aux produits visqueux à base de bitume, par exemple un filtre du type connu sous la désignation SCAMDISC (nom déposé) de la société SCAM filtres.

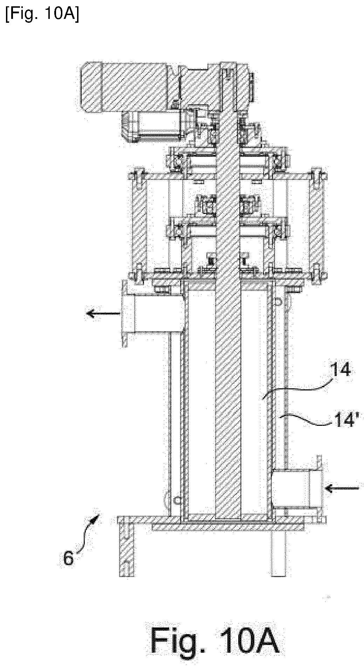

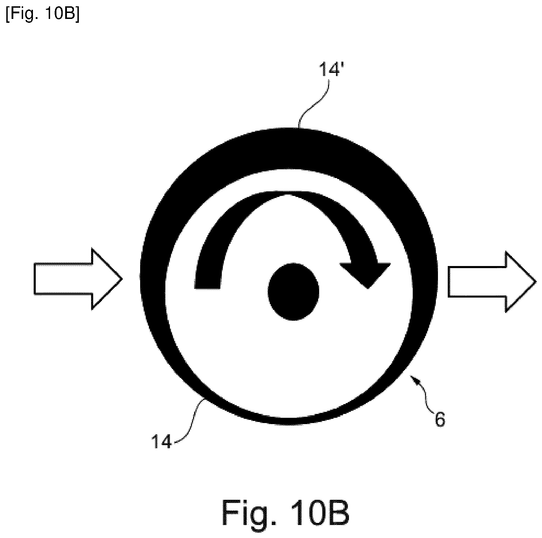

Toutefois, de manière préférentielle, le moyen de séparation microscopique 6 consiste en un raffineur à deux cylindres interpénétrants 14, 14', dont l'un au moins 14 (cylindre ou tambour cylindrique intérieur) est animé d'un mouvement rotatoire excentré, comme illustré sur les figures 10A et 10B, ainsi qu'éventuellement aussi, ou alternativement, d'un mouvement rotatoire sur lui-même.

Un tel raffineur est décrit dans la demande de brevet n° 2004002 déposée le 22 avril 2020 au nom de la demanderesse.

Avantageusement, l'illustration peut comprendre, à la suite du moyen de broyage 4, 4', ou du dernier broyeur à cylindres 4', successivement une pompe de transfert chauffée 9, un raffineur à cylindres(s) rotatif(s) excentré(s) 6 et un filtre 15, par exemple un filtre du type précité ou du type Trigonal (nom déposé) de la société Siefer.

L'invention porte également sur un procédé de traitement de produits composites 2 à base de matière(s) thermoplastique(s), plus particulièrement de déchets contenant majoritairement des membranes bitumineuses 2', ledit procédé comprenant au moins des étapes opérationnelles successives de chauffage, de réduction dimensionnelle, de broyage et de séparation, ledit traitement s'effectuant en flux global continu ou intermittent, le cas échéant régulé.

Ce procédé est caractérisé en ce qu'il consiste à réaliser les opérations de traitement précitées par l'intermédiaire d'une installation 1 telle que décrite ci-dessus et illustrée à titre d'exemple sur les figures annexées.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Installation (1) de traitement à des fins de recyclage de produits composites (2) à base de matière(s) thermoplastique(s), plus particulièrement de déchets contenant majoritairement des membranes bitumineuses (2'), ladite installation (1) comprenant au moins des moyens (3, 4, 4', 5, 6) de chauffage, de réduction dimensionnelle, de broyage et de séparation, ces moyens étant arrangés pour former au moins une ligne (1') de traitement et d'extraction de matière(s) à valoriser, fonctionnant en flux continu ou intermittent, le cas échéant régulé,
installation (1) dans laquelle
les moyens (3) de chauffage et de réduction dimensionnelle comprennent au moins un mélangeur chauffant à vis, recevant les produits composites (2) à traiter, configuré pour autoriser le passage de particules macroscopiques et délivrant un extrant hétérogène (3') sous forme liquide ou visqueuse, chargé notamment en particules et en fibres,
le moyen de broyage comprend au moins un broyeur à cylindres (4, 4') comportant deux cylindres de laminage (7 et 7') chauffés et entrainés en rotation en sens contraires, ces cylindres définissant entre eux un entrefer de passage dans lequel l'extrant (3') du mélangeur (3) est introduit par chute sous l'effet de la gravité, et
les moyens de séparation (5, 6) comprennent au moins un moyen de séparation macroscopique (5) sous la forme d'un dispositif de rejet de particules polluantes macroscopiques,
l'installation (1) comprenant, outre les moyens (3, 4, 4', 5, 6) précités arrangés dans l'ordre indiqué, avantageusement également des moyens (8) d'alimentation du mélangeur (3) et des moyens (9, 10) de transfert et/ou de stockage de l'extrant dépollué et/ou de la matière (2") valorisée,
installation (1) **caractérisée**
**en ce que** l'entrefer de passage entre les cylindres de laminage (7, 7') est de dimension centimétrique,
**en ce que** le moyen de séparation macroscopique (5) se présente sous la forme d'un dispositif de rejet de particules polluantes macroscopiques présentes dans l'extrant (3') et non ou insuffisamment réduites par le broyeur à cylindres (4, 4') auquel il est associé, et
**en ce que** les moyens de séparation (5, 6) comprennent aussi au moins un moyen de séparation microscopique (6), préférentiellement avec réduction à une dimension millimétrique, lequel est choisi dans le groupe formé par un filtre adapté à la matière à valoriser, un réducteur, un raffineur, une pompe dilacératrice, un dilacérateur ou une association de deux parmi les moyens précités.

2. Installation selon la revendication 1, **caractérisée en ce que** le dispositif de rejet (5) est disposé sous l'unique ou le premier broyeur à cylindres (4), dans le trajet de chute du flux d'extrant (3') sortant de ce dernier, et comprend un moyen mobile (5') d'éjection ou d'extraction à la volée des particules polluantes macroscopiques (2"') du flux d'extrant (3'), avec ou sans interruption temporaire dudit flux, ce en réaction à un signal d'actionnement délivré par ledit broyeur à cylindres (4).

3. Installation selon la revendication 2, **caractérisée en ce que** le signal d'actionnement correspond à un déplacement anormal de l'un au moins (7) des deux cylindres (7, 7') du broyeur (4) concerné, monté mobile, ou à une augmentation anormale de l'entrefer de passage préréglé (7") entre les deux cylindres (7 et 7'), provoqué(e) par le passage entre lesdits cylindres d'au moins une particule polluante (2‴) dont la taille dépasse une valeur seuil et qui résiste au broyage.

4. Installation selon l'une quelconque des revendications 1 à 3, **caractérisée en ce que** le dispositif de rejet (5) comprend un organe (5') pivotant ou translatif, expulsant la ou les particules polluantes cibles (2"') du flux d'extrant (3') ou déviant ou interrompant temporairement ce dernier, sous forme de voile ou d'écran, suite à un actionnement commandé.

5. Installation selon l'une quelconque des revendications 1 à 4, **caractérisée en ce que** le moyen de broyage comprend au moins deux broyeurs à cylindres (4 et 4') successifs présentant des valeurs d'entrefers (7") différentes et arrangés l'un sous l'autre en étant alignés par rapport au flux chutant d'extrant (3'), le dispositif (5) de rejet de particules polluantes macroscopiques (2‴) étant arrangé entre le premier broyeur (4) et le second broyeur (4').

6. Installation selon l'une quelconque des revendications 1 à 5, **caractérisée en ce que** le mélangeur à vis (3) comporte deux vis chauffantes parallèles (11), montées dans une auge chauffante (11') et présentant des filets hélicoïdaux discontinus, mutuellement interpénétrants et formés chacun de pales (12) séparées, plates et planes, montées de manière inclinée sur l'arbre support de la vis (11) concernée.

7. Installation selon la revendication 6, **caractérisée en ce que** le mélangeur à vis comporte également au moins un module de cisaillement (13) formé par au moins un premier groupe de pales (13') séparées, plates et planes, montées de manière perpendiculaire sur l'arbre support de la vis (11) considérée et venant en engagement interpénétrant mutuel avec un groupe de pales (13") séparées, plates et planes correspondantes fixées dans l'auge (11') ou sur l'autre vis (11).

8. Installation selon l'une quelconque des revendications 1 à 7, **caractérisée en ce que** le moyen de séparation microscopique (6) consiste en un raffineur à deux cylindres interpénétrants (14, 14'), dont l'un au moins (14) est animé d'un mouvement rotatoire excentré.

9. Installation selon l'une quelconque des revendications 1 à 7, **caractérisée en ce qu'**elle comprend, à la suite du moyen de broyage (4, 4'), ou du dernier broyeur à cylindres (4'), successivement une pompe de transfert chauffée (9), un raffineur à cylindres(s) rotatif(s) excentré(s) (6) et un filtre (15).

10. Procédé de traitement de produits composites (2) à base de matière(s) thermoplastique(s), plus particulièrement de déchets contenant majoritairement des membranes bitumineuses (2'), ledit procédé comprenant au moins des étapes opérationnelles successives de chauffage, de réduction dimensionnelle, de broyage et de séparation, ledit traitement s'effectuant en flux global continu ou intermittent, le cas échéant régulé,
procédé **caractérisé en ce qu'**il consiste à réaliser les opérations de traitement par l'intermédiaire d'une installation (1) selon l'une quelconque des revendications 1 à 9.

## Patentansprüche

1. Behandlungsanlage (1) für das Recycling von Verbundwerkstoffen (2) auf Basis von einem oder mehreren thermoplastischen Kunststoffen, insbesondere von Abfällen, die überwiegend Bitumenbahnen (2') enthalten, wobei die Anlage (1) mindestens Mittel (3, 4, 4', 5, 6) zum Erhitzen, zum Reduzieren der Größe, zum Zerkleinern und zum Trennen beinhaltet, wobei diese Mittel dazu eingerichtet sind, mindestens eine Linie (1') zur Behandlung und zur Extraktion von einem oder mehreren zu verwertenden Werkstoffen zu bilden, die mit einem kontinuierlichen oder intermittierenden, gegebenenfalls geregelten, Fluss arbeitet,
wobei in der Anlage (1)
die Mittel (3) zum Erhitzen und zum Reduzieren der Größe mindestens einen Heiz-Schneckenmischer beinhalten, der die zu behandelnden Verbundwerkstoffe (2) aufnimmt, dazu konfiguriert ist, den Durchgang von makroskopischen Partikeln zu gestatten, und einen heterogenen Output (3') in flüssiger oder viskoser Form bereitstellt, der insbesondere mit Partikeln und Fasern belastet ist,
das Mittel zum Zerkleinern mindestens einen Walzenzerkleinerer (4, 4') beinhaltet, der zwei beheizte Walzwalzen (7 und 7') umfasst, die in entgegengesetzten Richtungen drehangetrieben werden, wobei diese Walzen zwischen sich einen Durchgangsspalt definieren, in den der Output (3') des Mischers (3) durch Herabfallen unter dem Einfluss der Schwerkraft eingeführt wird, und
die Mittel zum Trennen (5, 6) mindestens ein Mittel zum makroskopischen Trennen (5) in Form einer Vorrichtung zum Abführen von makroskopischen verunreinigenden Partikeln beinhalten,
wobei die Anlage (1) neben den vorgenannten Mitteln (3, 4, 4', 5, 6), die in der angegebenen Reihenfolge eingerichtet sind, vorteilhafterweise auch Mittel (8) zum Beschicken des Mischers (3) und Mittel (9, 10) für den Transfer und/oder die Lagerung des gereinigten Outputs und/oder des verwerteten Werkstoffs (2") beinhaltet, wobei die Anlage (1) **dadurch gekennzeichnet ist,**
**dass** der Durchgangsspalt zwischen den Walzwalzen (7, 7') eine Größe im Zentimeterbereich aufweist,
**dass** das Mittel zum makroskopischen Trennen (5) in Form einer Vorrichtung zum Abführen von makroskopischen verunreinigenden Partikeln vorliegt, die in dem Output (3') vorhanden sind und durch den damit verbundenen Walzenzerkleinerer (4, 4') nicht oder unzureichend reduziert wurden, und
**dass** die Mittel zum Trennen (5, 6) ferner mindestens ein Mittel zum mikroskopischen Trennen (6), vorzugsweise mit einer Reduzierung auf eine Größe im Millimeterbereich, beinhalten, das aus der Gruppe ausgewählt ist, die durch einen Filter, der an den zu verwertenden Werkstoff angepasst ist, einen Reduzierer, einen Refiner, eine Mazeratorpumpe, einen Mazerator oder eine Verbindung aus zwei der vorgenannten Mittel gebildet wird.

2. Anlage nach Anspruch 1, **dadurch gekennzeichnet, dass** die Abführvorrichtung (5) unterhalb des einzigen oder des ersten Walzenzerkleinerers (4) in dem Fallweg des Output-Flusses (3'), der aus letzterem austritt, angeordnet ist und ein bewegliches Mittel (5') zum Auswerfen oder Extrahieren der makroskopischen verunreinigenden Partikel (2‴) aus dem Fluss des Outputs (3') im Betrieb beinhaltet, mit oder ohne temporäre Unterbrechung des Flusses, dieses als Reaktion auf ein Betätigungssignal, das von dem Walzenzerkleinerer (4) bereitgestellt wird.

3. Anlage nach Anspruch 2, **dadurch gekennzeichnet, dass** das Betätigungssignal einer abnormalen Bewegung mindestens einer (7) der zwei Walzen (7, 7') des betroffenen Zerkleinerers (4), die beweglich montiert ist, oder einer abnormalen Erhöhung des voreingestellten Durchgangsspalts (7") zwischen den zwei Walzen (7 und 7') entspricht, die durch den Durchgang, zwischen den Walzen, mindestens eines verunreinigenden Partikels (2‴) verursacht wird, dessen Größe einen Schwellenwert überschreitet und das sich der Zerkleinerung widersetzt.

4. Anlage nach einem der Ansprüche 1 bis 3, **dadurch gekennzeichnet, dass** die Abführvorrichtung (5) ein Schwenk- oder Translationsorgan (5') beinhaltet, das im Anschluss an eine gesteuerte Betätigung das oder die verunreinigenden Zielpartikel (2‴) aus dem Output-Fluss (3') ausstößt oder diesen letzteren, in Form eines Schleiers oder eines Vorhangs, temporär umlenkt oder unterbricht.

5. Anlage nach einem der Ansprüche 1 bis 4, **dadurch gekennzeichnet, dass** das Mittel zum Zerkleinern mindestens zwei aufeinanderfolgende Walzenzerkleinerer (4 und 4') beinhaltet, die unterschiedliche Spaltwerte (7") aufweisen und untereinander und nach dem herabfallenden Output-Fluss (3') ausgerichtet eingerichtet sind, wobei die Vorrichtung (5) zum Abführen makroskopischer verunreinigender Partikel (2‴) zwischen dem ersten Zerkleinerer (4) und dem zweiten Zerkleinerer (4') eingerichtet ist.

6. Anlage nach einem der Ansprüche 1 bis 5, **dadurch gekennzeichnet, dass** der Schneckenmischer (3) zwei parallele Heizschnecken (11) umfasst, die in einem Heiztrog (11') montiert sind und diskontinuierliche spiralförmige Wendel aufweisen, die gegenseitig ineinandergreifen und jeweils aus separaten, flachen und ebenen Schaufeln (12) gebildet sind, die geneigt an der Stützwelle der betroffenen Schnecke (11) montiert sind.

7. Anlage nach Anspruch 6, **dadurch gekennzeichnet, dass** der Schneckenmischer ferner mindestens ein Schermodul (13) umfasst, das durch mindestens eine erste Gruppe von getrennten, flachen und ebenen Schaufeln (13') gebildet wird, die senkrecht an der Stützwelle der betrachteten Schnecke (11) montiert sind und in einen gegenseitig ineinandergreifenden Eingriff mit einer Gruppe von entsprechenden getrennten, flachen und ebenen Schaufeln (13") kommen, die in dem Trog (11') oder an der anderen Schnecke (11) befestigt sind.

8. Anlage nach einem der Ansprüche 1 bis 7, **dadurch gekennzeichnet, dass** das Mittel zum mikroskopischen Trennen (6) aus einem Refiner mit zwei ineinandergreifenden Walzen (14, 14') besteht, von denen mindestens eine (14) in eine exzentrische Drehbewegung versetzt wird.

9. Anlage nach einem der Ansprüche 1 bis 7, **dadurch gekennzeichnet, dass** sie im Anschluss an das Zerkleinerungsmittel (4, 4') oder den letzten Walzenzerkleinerer (4') aufeinanderfolgend eine beheizte Transferpumpe (9), einen Refiner mit einer oder mehreren exzentrischen drehbaren Walzen (6) und einen Filter (15) beinhaltet.

10. Verfahren zur Behandlung von Verbundwerkstoffen (2) auf Basis von einem oder mehreren thermoplastischen Kunststoffen, insbesondere von Abfällen, die überwiegend Bitumenbahnen (2') enthalten, wobei das Verfahren mindestens aufeinanderfolgende operative Schritte des Erhitzens, des Reduzierens der Größe, des Zerkleinerns und des Trennens beinhaltet, wobei die Behandlung mit einem kontinuierlichen oder intermittierenden, gegebenenfalls geregelten, Gesamtfluss stattfindet, wobei das Verfahren **dadurch gekennzeichnet ist, dass** es darin besteht, die Behandlungsoperationen mittels einer Anlage (1) nach einem der Ansprüche 1 bis 9 durchzuführen.

## Claims

1. Installation (1) for treating composite products (2) based on thermoplastic material(s) for recycling purposes, more particularly waste containing mainly bituminous membranes (2'), said installation (1) comprising at least means (3, 4, 4', 5, 6) for heating, size reduction, crushing and separation, these means being arranged so as to form at least one line (1') for treating and extracting material(s) to be recycled, operating with a continuous or intermittent, and possibly regulated, flow,
in which installation (1)
the means (3) for heating and size reduction comprise at least one heating screw mixer receiving the composite products (2) to be treated, configured to allow the passage of macroscopic particles, and delivering a heterogeneous output product (3') in liquid or viscous form, in particular charged with particles and fibres, the crushing means comprise at least one cylinder crusher (4, 4') comprising two heated rolling cylinders (7 and 7'), which are driven in rotation in opposite directions, these cylinders defining between them a passage gap into which the output product (3') from the mixer (3) is introduced by falling under the effect of gravity, and the separating means (5, 6) comprise at least one macroscopic separating means (5) in the form of a device for discharging macroscopic contaminating particles, the installation (1) advantageously also comprising, in addition to the abovementioned means (3, 4, 4', 5, 6) arranged in the indicated order, means (8) for supplying the mixer (3) and means (9, 10) for transfer and/or storage of the decontaminated output product and/or of the recycled material (2"),
the installation (1) being **characterized in that** the passage gap between the rolling cylinders (7,
7') is of a few centimetres in size,
**in that** the macroscopic separating means (5) is in the form of a device for discharging macroscopic contaminating particles that are present in the output product (3') and that are not or not sufficiently reduced by the cylinder crusher (4, 4') associated therewith, and **in that** the separating means (5, 6) also comprise at least one microscopic separating means (6), preferably with reduction in size to a few millimetres, which is selected from the group formed by a filter suitable for the material to be recycled, a reducer, a refiner, a grinding pump, a comminutor or a combination of two of the abovementioned means.

2. Installation according to Claim 1, **characterized in that** the discharge device (5) is arranged below the only or the first cylinder crusher (4) in the fall path of the flow of output product (3') exiting the latter, and comprises a movable means (5') for the in-flight ejection or extraction of macroscopic contaminating particles (2‴) from the flow of output product (3'), with or without temporary interruption of said flow, in response to an actuation signal supplied by said cylinder crusher (4).

3. Installation according to Claim 2, **characterized in that** the actuation signal corresponds to an abnormal movement of at least one movably mounted cylinder (7) of the two cylinders (7, 7') of the crusher (4) concerned, or to an abnormal increase in the preset passage gap (7'') between the two cylinders (7 and 7'), caused by the passage between said cylinders of at least one contaminating particle (2‴) that has a size exceeding a threshold value and is resistant to crushing.

4. Installation according to any one of Claims 1 to 3, **characterized in that** the discharge device (5) comprises an element (5'), movable by pivoting or translation, which expels the target contaminating particle(s) (2‴) from the flow of output product (3') or temporarily diverts or interrupts said flow, in the form of a sheet or screen, following an actuation command.

5. Installation according to any one of Claims 1 to **4, characterized in that** the crushing means comprises at least two successive cylinder crushers (4 and 4') that have different sizes of gap (7'') and are arranged one below the other, aligned relative to the falling flow of output product (3'), the device (5) for discharging macroscopic contaminating particles (2‴) being arranged between the first crusher (4) and the second crusher (4').

6. Installation according to any one of Claims 1 to 5, **characterized in that** the screw mixer (3) comprises two parallel heating screws (11) mounted in a heating trough (11') and having discontinuous helical threads, which are mutually inter-penetrating and each formed from separate, flat and level blades (12) mounted in an inclined manner on the support shaft of the screw (11) concerned.

7. Installation according to Claim 6, **characterized in that** the screw mixer also comprises at least one shearing module (13) formed by at least a first group of separate, flat and level blades (13'), which are mounted perpendicularly on the support shaft of the screw (11) in question and come into mutual inter-penetrating engagement with a corresponding group of separate, flat and level blades (13'') fixed in the trough (11') or on the other screw (11).

8. Installation according to any one of Claims 1 to 7, **characterized in that** the microscopic separating means (6) consists of a refiner with two inter-penetrating cylinders (14, 14'), at least one (14) of which is driven in an eccentric rotational movement.

9. Installation according to any one of Claims 1 to 7, **characterized in that** it comprises, after the crushing means (4, 4') or the last cylinder crusher (4'), in succession, a heated transfer pump (9), a refiner with eccentric rotary cylinder(s) (6) and a filter (15).

10. Method for treating composite products (2) based on thermoplastic material(s), more particularly waste containing mainly bituminous membranes (2'), said method comprising at least successive operational stages of heating, size reduction, crushing and separation, said treatment being performed in a continuous or intermittent global, possibly regulated, flow,
the method being **characterized in that** it consists in performing the treatment operations by means of an installation (1) according to any one of Claims 1 to 9.
